# EUROPEAN PATENT SPECIFICATION

(11) **EP 0 583 814 B1**
(45) Date of publication and mention of the grant of the patent: **21.10.1998**
(21) Application number: 93202138.9
(22) Date of filing: 21.07.1993
(51) Int. Cl.: C08G 81/02, C09K 7/02, C10M 107/26, E21B 33/138, E21B 43/27, C08F 299/00

(54) **Thermoviscosifying polymers, their synthesis and their uses in particular in the oil industry**
Thermoviskositätserhöhende Polymere, ihre Synthese und ihre Verwendungen, insbesondere in der Ölindustrie
Polymères thermoviscosifiants, leur synthèse et leurs applications notamment dans l'industrie pétrolière

(30) Priority: 20.08.1992 FR 9210224
(43) Date of publication of application: 23.02.1994
(73) Proprietor: SOFITECH N.V., 2030 Antwerpen (BE)
(72) Inventor: Maroy, Pierre, F-42330 St. Galmier (FR); Hourdet, Dominique, F-94360 Bry s/Marne (FR); L'Alloret, Florence, F-75012 Paris (FR); Audebert, Roland, F-95320 Saint Leu La Foret (FR)
(74) Representative: Richebourg, Michel François

(56) References cited:
- EP-A- 0 014 258
- US-A- 4 676 317
- DATABASE WPIL Derwent Publications Ltd., London, GB; AN 91-089591[91] & JP-A-3 032 729 (BIO-MATERIAL UNIVER) 13 February 1991

## Description

The present invention relates to the technical sector of polymers and more particularly polymers and copolymers the viscosity of which increases with temperature in solution in an aqueous medium.

In this context, the word "increases" means that the links associate locally above a certain threshold temperature, which causes a physical increase in the molecular weight as opposed to the decrease in viscosity classically observed with an increase in temperature.

Thus, the viscosity can actually "increase" or else remain approximately constant.

Used in this context, the word "increases" has these two meanings throughout the text.

Such products have numerous uses as thickening agents, constituents of fracturing fluids or drilling fluids or completion fluids, in particular for bore hole cementation, in the oil or geothermal industry, or of acidification, of fluidity control agents or of fluids for the enhanced recovery of oil, and similar fluids for the oil industry, as industrial cleaning fluids, as hydraulic fluids and as water-based lubricants.

Most of these uses occur in aqueous medium. However, on reading the description which follows, the choice of polymers which can be used in a non-aqueous medium may be envisaged; in particular gels for industrial cleaning, in an alcohol medium, notably methanol, will be mentioned.

Their field of application therefore covers a large number of industries and their possible uses will be clearly apparent to an expert from the properties described below.

In this field the Patent USP 4,432,881 is known, which relates to thickening agents constituted by a hydrosoluble polymer chain carrying hydrophobic side chains which do not have the LCST property (as defined below) in the useful temperature range. The hydrophobic fraction of a surfactant fixes on these hydrophobic side chains.

When the temperature rises, the surfactant dehydrates, separates from the water, and a slight increase in viscosity is produced.

In the present Application, "useful temperature range", or a similar wording, will mean the temperature range which corresponds to the application envisaged for the thermoviscosifying polymer, which must of course correspond to the temperature range situated around the LCST critical temperature range of the links concerned.

The invention stems from an original approach which is in itself simple in its principle, which consists of fixing on (or incorporating in) a polymer chain, hydrosoluble in the temperature range of the application considered, a suitable proportion of hydrophilic side chains having the LCST property, which become hydrophobic when the temperature rises (hereafter "heat-sensitive side chains").

It has been discovered that in a general way the said heat-sensitive chains could be suitably fixed on - or incorporated in - the macromolecular structure considered starting with certain prepolymers or macromonomers having a so called "Lower Critical Solution Temperature" or LCST.

This general principle can be used, in a quite preferred way, according to the two so-called "grafting" or "copolymerization" variants below.

The first preferred approach consists of grafting, by known techniques, heat-sensitive side chains onto a polymer skeleton, itself hydrosoluble. It is necessary in this case to provide the side chain with an active site capable of cooperating, for the grafting, with a corresponding active site on the polymer skeleton.

The second preferred approach consists of copolymerizing, by known techniques, i) hydrosoluble monomers, prepolymers or macromonomers forming hydrosoluble sequences with ii) monomers, prepolymers or macromonomers which are hydrosoluble or capable of forming hydrosoluble sequences and carry a side chain having the LCST property in the useful temperature range.

Operation by polycondensation can also be envisaged.

The invention therefore relates in the main part to copolymers carrying heat-sensitive side chains the synthesis of which is carried out according to the general principles above.

In a less preferred manner, a copolymerization of hydrosoluble sequences with the LCST property selected from polyoxyethylene chains (POE), polyoxypropylene chains (POP) or chains of polyoxide of ethylene and propylene (POEP) and hydrosoluble sequences without the LCST property will be envisaged.

The invention has been developed more particularly on the basis:
- of a basic polymer chain or skeleton containing acrylic acid units; and
- of heat-sensitive grafts of polyethyleneglycol (POE) chain type carrying an active terminal group for grafting, notably an amine function, the POE being able to be replaced by a POP (polyoxypropylene) or a POEP (polyoxide of ethylene and propylene).

The study has also been extended to other skeletons possessing acrylic acid units and notably to copolymers of acrylic acid and/or acrylamide and/or AMPS (acrylamido-methylpropyl-sulphonate) and/or N-methylvinyl-N-acetamide.

The invention also relates in particular to copolymers of AMPS and macromonomers based on POE, POP or POEP.

A non-limitative list of chains having the LCST property in aqueous solution will be found in Table A hereafter (Taylor et al., J. of polymer science, 13, 2551-2570 (1975)). For the synthesis of thermoviscosifying polymers according to the invention, an expert can use standard and known copolymerization and grafting techniques.

The methods given as an example are mentioned in particular. The operating methods, the choice of solvents, etc. of these reactions are well known to an expert.

The following examples illustrate the invention.

### EXEMPLE 1

### 1. SYNTHESES

The syntheses given below are used as examples of the invention. In these syntheses, many of the parameters may be varied. Amongst others: a) the nature of the hydrosoluble polymer skeleton used in Examples 1.1 and 1.2. This polymer can be a copolymer of two or more monomers. b) The molecular weight of this skeleton. c) The nature of the side chains. d) The molecular weight (or distribution of molecular weight) of the side chains. e) The modification rates (proportion of side chains relative to the skeleton). f) The nature of the chemical bond between the hydrosoluble skeleton and the side chains. g) The nature of the monomers used in the synthesis by copolymerization of Example 1.3. Here also, several different monomers can be used. h) The polymerization synthesis route in Example 1.3 (radical, anionic, cationic).

### 1.1 Grafting of monoamino polyoxyethylene chains onto a polyacrylic skeleton (PAA) in an aqueous medium in the presence of a hydrosoluble carbodiimide: N'-(3-dimethylaminopropyl)-N-ethylcarbodiimide hydrochloride (EDC).

24 g of a 25% solution of polyacrylic acid (M = 150,000) (PAA 150), that being 6 g of polymer, is introduced into a 1 litre beaker containing 250 ml of water. The solution is then neutralized with 1N soda (pH = 8) and taken to a temperature of 60 °C.

At the same time, a solution of 6 g of O-(2-aminoethyl-)-0'-methyl polyethylene glycol of a molecular weight of 5,000 (POE5) in 250 ml of water is prepared. The proportion of POE5 monoamino chain is calculated taking into account the modification rate to be achieved (in this case 0.4%) on the basis of a grafting yield of the order of 30% under these operating conditions. The solubilization of the POE5 is instantaneous when hot and this solution is added to the reaction mixture.

0.4 g of EDC, that is a EDC/POE5 molar ratio of 2, is added in the solid state. The reaction, monitored by size exclusion chromatography (gel permeation chromatography (GPC)), is continued for 2 hours. Then the reaction medium is directly transferred to a "Millipore" tangential filtration unit with "Pellicon" cartridges (cut-off threshold: 40,000 D). After a series of 10 consecutive filtrations using in total 20 litres of water, the residue is recovered, checked by GPC, concentrated then lyophilized.

The grafting rate is determined by NMR spectroscopy. D: Dalton unit

### 1.2 Grafting of monoamino polyoxyethylene chains onto a polyacrylic skeleton in an organic medium in the presence of dicyclohexylcarbodiimide (DCCI).

2 g of polyacrylic acid of a molecular weight of 500,000 (PAA500) in a solid form and 80 ml of N-methyl-2-pyrrolidone (NMP) are introduced into 250 ml a three-necked flask fitted with a bar magnet, a cooling apparatus and heat-regulated by an oil bath. The solution is left under agitation for one night at 60 °C until total solubilization of the PAA is achieved.

At the same time, a solution of 0.7 g of POE5 in 40 ml of NMP is prepared. The proportion of POE5 is calculated taking into account the modification rate to be achieved (in this case 0.17 %) on the basis of a grafting yield of the order of 30 to 35% under these operating conditions. The solubilization of the POE5 is instantaneous when hot and this solution is added to the reaction medium. 0.058 g of DCCI, that being a DCCI/POE5 molar ratio of 2, is dissolved in 10 ml of NMP then added slowly to the initial mixture. The reaction medium is maintained at 60 °C for 8 hours before being cooled down in an ice bath.

The reaction medium is then treated with a 40% aqueous solution of soda (6.7 g in 20 ml water). The addition takes place slowly under vigorous agitation and results in the precipitation of the modified sodium polyacrylate. The precipitate is filtered through a No. 4 filtering crucible (porosity 17 µ), washed firstly with 50 ml of NMP then three times with 50 ml of methanol. The solid obtained is dried under vacuum at 30 °C overnight.

Subsequently the polymer is put back in solution in water at a concentration of 2% then re-precipitated in a volume of methanol which is 20 times greater. After agitation, decantation and renewal of the methanol solution, the product is finally filtered then dried as previously.

### 1.3 Copolymerization of the POE macromonomers with AMPS

### A. Synthesis of the macromonomers

40 ml of methylene chloride, 1.44 g of acrylic acid (AA: 0.02 mole), 5 g of POE5 (0.001 mole) in solid form and 4.13 g of DCCI (0.02 mole) are introduced into a 100 ml beaker.

The reaction is continued for one hour under agitation then the reaction medium is filtered through a No. 4 filtering crucible (porosity 17 µ) in order to eliminate the decomposition product of the coupling agent which has precipitated.

Next the mixture is concentrated (10 ml) and then the POE macromonomer is separated from the excess acrylic acid by precipitation in 100 ml of ether. After 3 new washings each time with 100 ml of ether, the product is finally dried at 30 °C under vacuum overnight.

### B. Radical copolymerization

200 ml of ultrafiltered and deionized water, 4.5 g of AMPS (0.022 mole) and 1.5 g of the POE5 macromonomer (MPOE5: 0.0003 mole), the proportion of the latter being a function of the substitution rate to be achieved (in this example the relative molar proportion of POE in the mixture is 1.37%) are introduced into a 500 ml reactor fitted with a magnetic stirrer, a cooling apparatus and a nitrogen supply. The acid functions are then neutralized by 2N soda (pH = 9).

After bubbling nitrogen through the reaction medium for 15 minutes, 0.15 g of potassium persulphate (0.00055 mole) dissolved in 20 ml of water is added, then 3 minutes later, 0.15 g of N,N,N',N'-tetramethyl-ethylenediamine (TMEDA: 0.0013 mole) also dissolved in 20 ml of water, is added.

The copolymerization, monitored by GPC, is relatively rapid and the reaction is continued under agitation and under a nitrogen atmosphere for 4 hours. The reaction mixture, concentrated to 50 ml, is precipitated into a very large excess of acetone (1000 ml) before undergoing a series of filtrations and washings with acetone. Finally the sample is dried under vacuum at 30 °C overnight. NMR analysis shows that in the product obtained in this example the relative molar proportion of POE incorporated is 1.15%. This polymer will hereafter be called: pAMPS/1.15 - POE5 (For other polymers and/or other molar proportions, the similarity of name will be clear in what follows).

### 1.4 Grafting of monoamino polyoxyethylene chains onto a terpolymer skeleton containing AMPS units

This grafting reaction is carried out on the terpolymer which has the following composition: (% in moles of monomer units): AMPS (65%), acrylic acid (15%), N-methylvinylacetamide (20%), and allowing the fixation of POE5.

A solution of 20 g of copolymer in 2800 ml of water is prepared in a beaker and taken to 60 °C. The pH is adjusted to 8 by the addition of soda. A solution of 9.2 g of POE5 in 400 ml of water is added to the reaction mixture. The proportion of POE5 is calculated taking into account the modification rate to be achieved (in this case 0.6% in moles of POE relative to the copolymer), on the basis of a grafting yield of the order of 30% under the operating conditions. 2 g of EDC is added in the solid state. The reaction, monitored by GPC, is continued for 5 hours. Then the reaction medium is directly transferred to a filtration unit (cut-off threshold: 40,000 D). After 10 consecutive filtrations, the residue is concentrated then lyophilized.

This example shows that the AMPS/POE copolymer family synthesized by copolymerization in Example 1.3 is also accessible by the grafting method. Also this example shows that it is possible to extend the concept of grafting of heat-sensitive chains to most of the class of hydrosoluble polymers.

### 2. RHEOLOGICAL BEHAVIOUR (DEVELOPMENT OF VISCOSITY WITH TEMPERATURE)

Amongst the parameters which may influence the rheological behaviour there are: the nature and molecular weight of the hydrosoluble chain, the nature and molecular weight of the side chains, the percentage of side chains, the polydispersities of the chains and links, the concentration of the thermoviscosifying polymer, the presence and concentration of salt in the aqueous medium, the nature of the salt, the presence and concentration of free chains with LCST property in the medium, etc.

The following examples are used to illustrate the thermoviscosifying effect.

The results given in Tables 1 - 6 were obtained with a cone/plane type viscometer of "Carri-med" CS 100 type.

| | |
|---|---|
| Cp | concentration of thermoviscosifying polymer in g/dl |
| Cs | concentration of salt in mole/litre |
| Sigma | stress in N/m² |
| Gamma | shear rate in s⁻¹ |
| Eta | viscosity in centipoises (mPa.s) |
| T | temperature in degrees Celsius |

### 2.1 Effect of the concentration of the thermoviscosifying polymer.

Table 1 gives the results obtained for a polymer synthesized according to the method illustrated by Example 1.1.

It concerns a sodium polyacrylate of a molecular weight of 150,000 grafted with 0.8% POES (PAA150/0.8-POE5). The stress was constant. The measurements are taken in a solution of 0.8 mole/litre of K₂CO₃.

**TABLE 1**

| | Cp = 1.6 g/dl Sigma = 1.5 | Cp = 4.1 g/dl Sigma = 15 | Cp = 8.4 g/dl Sigma = 15 |
|---|---|---|---|
| T | Eta | Eta | Eta |
| 20 | 23 | 67 | 614 |
| 30 | 19 | 57 | 735 |
| 40 | 16 | 57 | 1230 |
| 50 | 15 | 84 | 3300 |
| 60 | 16 | 244 | 17300 |
| 70 | 25 | 2200 | ----- |
| 75 | 37 | 10000 | ----- |

This table shows that for a relatively low concentration (1.6 g/dl) of thermoviscosifying polymer, after an initial reduction in viscosity, the viscosity starts to slightly increase from 60 °C. For a higher concentration (8.4 g/dl), the thermoviscosifying effect is obtained from ambient temperature.

The same effect is illustrated (Table 2) for the behaviour of a polymer obtained by the method according to Example 1.2. The polymer is PAA500/0.17-POE5: a sodium polyacrylate of molecular weight 500,000 grafted with POE5 at a percentage of 0.17%.

The measurements are carried out in a 0.6 mole/l solution of K₂SO₄.

**TABLE 2**

| | Cp = 1.0 g/dl Sigma = 1.5 | Cp = 5.0 g/dl Sigma = 1.5 | Cp = 10 g/dl Sigma = 15 |
|---|---|---|---|
| T | Eta | Eta | Eta |
| 20 | 16 | 127 | --- |
| 30 | 13 | 111 | 394 |
| 40 | 11.5 | 92 | 320 |
| 50 | 10.7 | 79 | 264 |
| 60 | 10 | 62 | 236 |
| 70 | 9.5 | 59 | 237 |
| 75 | --- | --- | 257 |

In these conditions, the effect is visible only at high concentrations of polymer, and at relatively high temperature.

### 2.2 Effect of the concentration of salt in the measurement medium.

Table 3 gives the results of measurements for the polymer (PAA150/0.8-POE5) at 2 g/dl for variable concentrations (Cs) of potassium carbonate K₂CO₃.

**TABLE 3**

| | Cs = 0.6 M Sigma = 1.5 | Cs = 0.9 M Sigma = 1.5 | Cs = 1.2 M Sigma = 1.5 |
|---|---|---|---|
| T | Eta | Eta | Eta |
| 20 | 31 | 30 | 31 |
| 30 | 25 | 24 | 41 |
| 40 | 21 | 24 | 77 |
| 50 | 18 | 32 | 160 |
| 60 | 16.5 | 62 | 230 |
| 70 | --- | 239 | --- |
| 75 | --- | 498 | --- |
| M = mole/litre | | | |

This table shows that the thermoviscosifying effect starts at lower temperatures for higher salt concentrations. For Cs = 0.6 M there is no effect below 60 °C, for Cs = 0.9 M the effect starts at 50 °C and for Cs = 1.2 M the thermoviscosification already starts at ambient temperature.

Table 4 shows the same effect for PAA150/0.4-POE5 (obtained according to the method of Example 1.1) with a variable concentration of potassium fluoride KF, Cp = 5 g/dl.

**TABLE 4**

| | Cs = 1.5 M Sigma = 1.5 | Cs = 2.0 M Sigma = 1.5 | Cs = 2.5 M Sigma = 1.5 | Cs = 3.0 M Sigma = 15 |
|---|---|---|---|---|
| T | Eta | Eta | Eta | Eta |
| 20 | 32 | 34 | 35 | 60 |
| 30 | 27 | 28 | 34 | 106 |
| 40 | 23 | 24 | 44 | 400 |
| 50 | 20 | 24 | 94 | 3500 |
| 60 | 19 | 29 | 440 | 62000 |
| 70 | 18 | 52 | 5090 | ----- |
| 75 | 18 | 97 | 22500 | ----- |

The same tendency is illustrated by the viscosity measurements for a polymer obtained according to the method described in Example 1.3. These results are given in Table 5. The polymer is a copolymer AMPS/POE5 (p AMPS/2.15 - POE5), Cp = 10 g/dl.

The concentration of K₂CO₃ varies.

**TABLE 5**

| | Cs = 0.4 M Sigma = 5 | Cs = 0.6 M Sigma = 5 | Cs = 0.8 M Sigma = 5 |
|---|---|---|---|
| T | Eta | Eta | Eta |
| 20 | 36 | 40 | 50 |
| 30 | 29 | 36 | 49 |
| 40 | 24 | 35 | 50 |
| 50 | 21 | 36 | 58 |
| 60 | 20 | 40 | 82 |
| 70 | 21 | 52 | 138 |
| 75 | 23 | 63 | 149 |

### 2.3 Example of a thermoviscosifying polymer in the absence of a salt (Cs = 0), and the influence of the presence of non-grafted polymer with LCST in solution.

Table 6 shows the results of a polymer (PAA 150/21-POP) obtained according to the method of Example 1.1 with 21% (in moles) of POP (polyoxypropylene of molecular weight 600). This table shows that the presence of salt is not always necessary to obtain thermoviscosification in this temperature range. Also it shows that the amplitude of the effect can be increased considerably by the presence of of non-grafted polymer with LCST. In this example the non-grafted polymer with LCST is a POP of molecular weight 600.

The concentration of thermoviscosifying polymer (Cp) is 8% by weight. C(pop) is the concentration of non-grafted POP added to the solution, and varies between 0 and 9.7% by weight.

**TABLE 6**

| | C(pop) = 0% Sigma = 10 | C(pop) = 1.1% Sigma = 10 | C(pop) = 5% Sigma = 10 |
|---|---|---|---|
| T | Eta | Eta | Eta |
| 20 | 155 | 165 | 181 |
| 30 | 116 | 125 | 133 |
| 40 | 93 | 100 | 108 |
| 50 | 84 | 101 | 124 |
| 60 | 98 | 183 | 290 |
| 70 | 178 | 407 | 788 |
| 75 | 250 | 570 | 1188 |

### 2.4 Rheological behaviour at higher temperatures.

Rheological measurements were carried out at temperatures higher than 75 °C using a viscometer of Fann 50 type. In this case, the shear rate was kept constant (gamma = 100 s⁻¹).

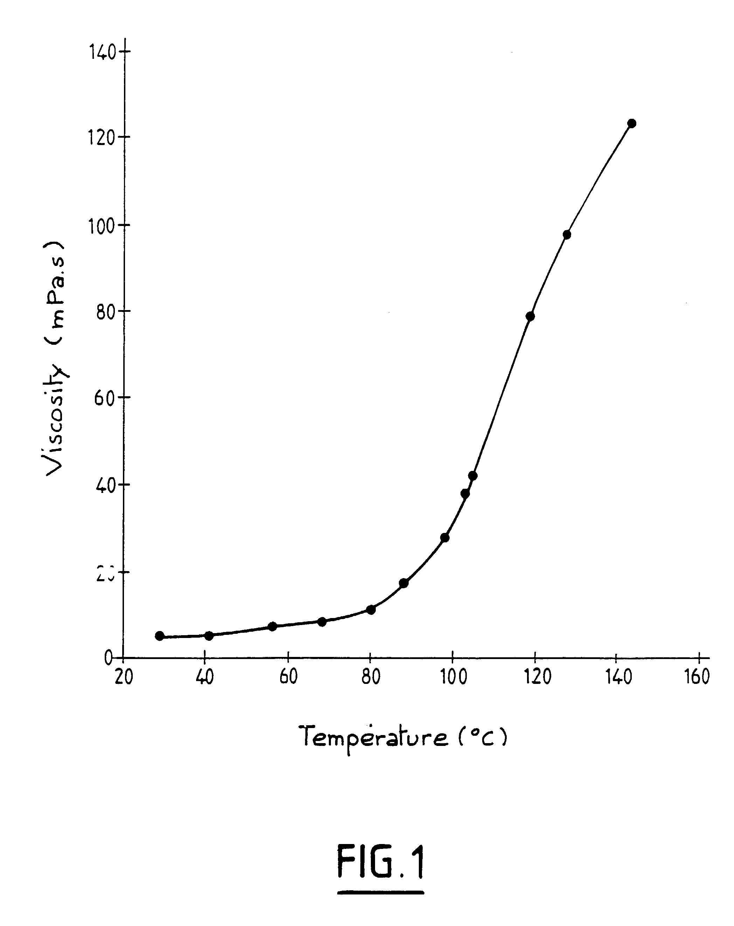

Figure 1 shows the variation in viscosity as a function of temperature for a polymer obtained according to the method of Example 1.3: pAMPS/1.2-POE5 Cp = 10 g/dl and the salt concentration (K₂CO₃) is 0.7 M.

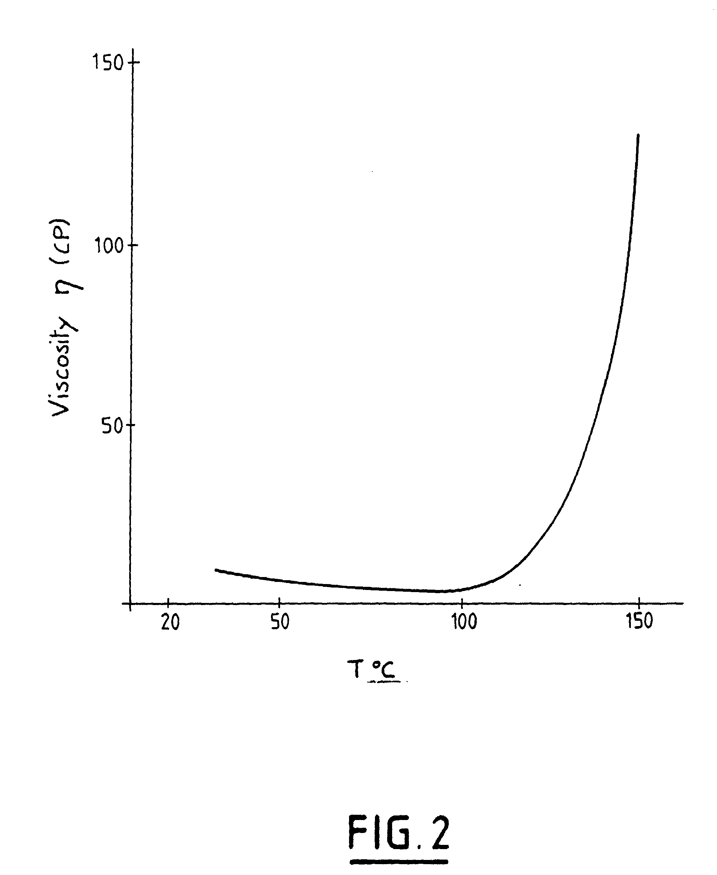

Figure 2 shows the variation in viscosity as a function of temperature for a polymer obtained according to the method of Example 1.4. It is a terpolymer of AMPS, N-methylvinyl-acetamide and acrylic acid, grafted with POE5. This polymer contains 0.6% of POE in moles. Cp = 4 g/dl and Cs (K₂CO₃) = 0.5 M.

### 2.5 Example of a solution of approximately constant viscosity.

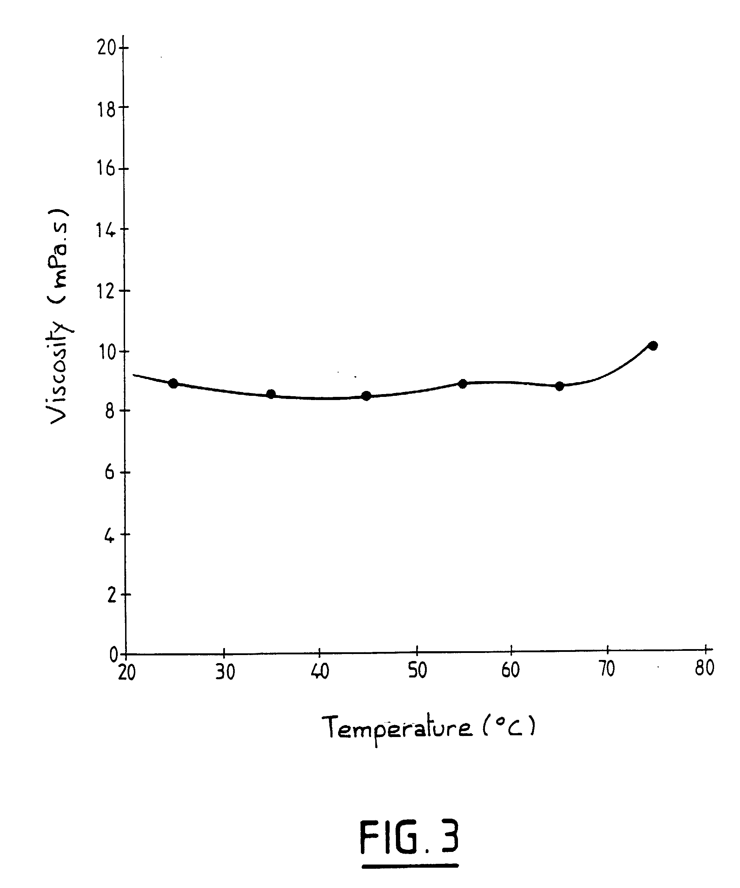

Figure 3 shows the variation in viscosity as a function of temperature for PAA150/5.9-POEP. It is a polymer obtained according to the method of Example 1.1 using a O-(2-aminopropyl)-O'-(methoxyethyl) copolyethylene, propylene glycol, of a molecular weight of approximately 1100. This figure shows the possibility of synthesizing polymers having constant viscosity solutions over a large range of temperatures.

Therefore the following are specific and non-limitative examples of polymers according to the invention:
- Polyacrylic acid of molecular weight 500,000 grafted with 0.17% (per mole) of polyoxyethylene of molecular weight 5,000.
- Polyacrylic acid of molecular weight 150,000 grafted with 0.8% (per mole) of polyoxyethylene of molecular weight 5,000.
- Polyacrylic acid of molecular weight 150,000 grafted with 0.4% (per mole) of polyoxyethylene of molecular weight 5,000.
- A copolymer p AMPS/2.15-POE5, and POE chains of molecular weight 5,000.
- A copolymer pAMPS/1.15-POE5, and POE chains of molecular weight 5,000.
- Polyacrylic acid of molecular weight 150,000 grafted with 21% (per mole) of polyoxypropylene of molecular weight 600.
- Polyacrylic acid of molecular weight 150,000 grafted with 5.9% (per mole) of propylene and ethylene polyoxide of molecular weight 1,100.
- A terpolymer of AMPS, N-methylvinylacetamide and acrylic acid, grafted with 0.6% in moles of polyoxyethylene of molecular weight 5,000.

**TABLE A**

| **HYDROSOLUBLE POLYMERS WITH LCST** |
|---|
| methylcellulose, |
| hydroxypropylcellulose, |
| polyvinylalcohol - vinyl acetate copolymers, |
| poly(ethylene glycol), |
| polypropylene glycol, |
| polymethacrylic acid, |
| poly-N-vinyl-2-oxazolidone, |
| partially acetalized polyvinyl alcohol, |
| partially cyanoethylated polyvinyl alcohol, |
| poly-N-isopropylacrylamide, |
| poly(vinyl methyl ether), |
| poly-L-proline, |
| other polyamino acids and proteins and copolymers constructed from hydrophobic and hydrophilic monomers. |

## Claims

1. Polymers the viscosity of an aqueous solution thereof increases or remains approximately constant with an increase in temperature above a certain threshold temperature **characterised in that** they consist of a hydrosoluble polymer skeleton comprising units that are hydrophilic in the whole temperature range of intended use, said hydrosoluble skeleton
a) carrying grafted heat-sensitive parts and/or
b) incorporating in the chain sequence of hydrophilic units heat-sensitive units consisting of polyoxyethylene chains (POE), polyoxypropylene chains (POP) or chains of polyoxide of ethylene and propylene (POEP) or hydrosoluble sequences carrying grafted heat-sensitive parts,
said heat-sensitive parts being hydrophilic at temperatures below a Lower Critical Solution Temperature (LCST) within the temperature range of intended use and hydrophobic above the Lower Critical Solution Temperature.

2. Polymers according to claim 1, characterised in that said hydrophilic units of the skeleton consist of acrylic acid units.

3. Polymers according to claim 1, **characterised in that** said hydrosoluble skeletons consist of a terpolymer of acrylic acid, acrylamido-methylpropylsulfonate (AMPS) and N-methyl vinyl acetamide.

4. Polymers according to claim 1, **characterised in that** said grafted heat-sensitive parts consist of polyoxyethylene chains (POE), polyoxypropylene chains (POP) or chains of polyoxide of ethylene and propylene (POEP).

5. Polymers according to claim 1, **characterised in that** said heat-sensitive parts consist of chains chosen from:
. methylcellulose,
. hydroxypropylcellulose,
. polyvinyl alcohol - vinyl acetate copolymers,
. poly(ethylene glycol),
. polypropylene glycol,
. polymethacrylic acid,
. poly-N-vinyl-oxazolidone,
. partially acetalized polyvinyl alcohol,
. partially cyanoethylated polyvinyl alcohol,
. poly-N-isopropylacrylamide,
. poly(vinyl methyl ether),
. poly-L-proline,
. other polyamino acids and proteins
. and copolymers constructed from hydrophobic and hydrophilic monomers.

6. Polymers according to any of claims 1 to 5, **characterised in that** they are obtained by grafting the heat-sensitive parts a) carrying an active grafting site onto corresponding active sites of the skeleton.

7. Polymers according to any of claims 1 to 5, **characterised in that** they are obtained by the copolymerization of the monomers constituting said skeleton and of the monomers constituting said sequences according to b), or, in the two cases, of monomers and prepolymers or macromonomers corresponding, respectively, to said skeleton or to said chains.

8. Polymers according to any of claims 1 to 7, **characterised in that** they are chosen from:
. Polyacrylic acid of molecular weight 500,000 grafted with 0.17% (per mole) of polyoxyethylene of molecular weight 5,000, according to claim 6.
. Polyacrylic acid of molecular weight 150,000 grafted with 0.8% (per mole) of polyoxyethylene of molecular weight 5,000 according to claim 6.
. Polyacrylic acid of molecular weight 150,000 grafted with 0.4% (per mole) of polyoxyethylene of molecular weight 5,000, according to claim 6.
. A copolymer p AMPS/2.15-POE5 and a molecular weight of POE chains of 5,000, according to claim 7,
. A copolymer p AMPS/1.15-POE5 and a molecular weight of POE chains of 5,000, according to claim 7.
. Polyacrylic acid of molecular weight 150,000 grafted with 21% (per mole) of polyoxypropylene of molecular weight 600, according claim 6.
. Polyacrylic acid of molecular weight 150,000 grafted with 5.9% (per mole) of propylene and ethylene polyoxide of molecular weight 1,100, according claim 6.
. A terpolymer of AMPS, N-methylvinylacetamide and acrylic acid, grafted with 0.6% in moles of polyoxyethylene of molecular weight 5,000, according to claim 6.

9. The use of polymers according to any one of claims 1 to 8 as thickening agents, constituents of fracturing fluids or of drilling or completion fluids, in particular for hole cementation, in the oil or geothermal industries, or of acidification, of fluidity control agents or of fluids for the enhanced recovery of oil, and similar fluids for the oil industry, as industrial cleaning fluids, as hydraulic fluids and as water-based lubricants.

10. The use of polymers according to claim 9, **characterised in that** salt is added to the fluid in order to lower the critical temperature above which the viscosity increases.

11. The use of polymers according to claim 9 or 10, **characterised in that** non-grafted heat-sensitive polymers are added to the fluid in order to lower the critical temperature above which the viscosity increases.

## Patentansprüche

1. Polymere, deren wäßrige Lösung eine Viskosität hat, die bei einem Anstieg der Temperatur über eine bestimmte Schwellentemperatur zunimmt oder ungefähr konstant bleibt,
**dadurch gekennzeichnet,**
daß sie aus einem wasserlöslichen Polymerskelett bestehen, welches Einheiten umfaßt, die über den gesamten Temperaturbereich der vorgesehenen Verwendung hydrophil sind, wobei das wasserlösliche Skelett
a) gepfropfte, wärmeempfindliche Teile trägt und/oder
b) in der Kettensequenz von hydrophilen Einheiten wärmeempfindliche Einheiten, die aus Polyoxyethylenketten (POE), Polyoxypropylenketten (POP) oder Ketten aus Polyoxid von Ethylen und Propylen (POEP) bestehen, oder wasserlösliche Sequenzen mit gepfropften wärmeempfindlichen Teilen enthält,
wobei die wärmeempfindlichen Teile bei Temperaturen unterhalb einer unteren kritischen Lösungstemperatur (LCST) innerhalb des Temperaturbereiches der vorgesehenen Verwendung hydrophil sind und oberhalb der unteren kritischen Lösungstemperatur hydrophob sind.

2. Polymere nach Anspruch 1,
**dadurch gekennzeichnet,**
daß die hydrophilen Einheiten des Skeletts aus Acrylsäureeinheiten bestehen.

3. Polymere nach Anspruch 1,
**dadurch gekennzeichnet,**
daß die wasserlöslichen Skelette aus einem Terpolymer aus Acrylsäure, Acrylamido-methylpropylsulfonat (AMPS) und N-Methyl-vinyl-acetamid bestehen.

4. Polymere nach Anspruch 1,
**dadurch gekennzeichnet,**
daß die gepfropften, wärmeempfindlichen Teile aus Polyoxyethylenketten (POE), Polyoxypropylenketten (POP) oder Ketten aus Polyoxid von Ethylen und Propylen (POEP) bestehen.

5. Polymere nach Anspruch 1,
**dadurch gekennzeichnet,**
daß die wärmeempfindlichen Teile aus Ketten bestehen, die ausgewählt sind aus:
. Methylcellulose,
. Hydroxypropylcellulose,
. Polyvinylalkohol - Vinylacetatcopolymeren,
. Poly(ethylenglykol),
. Polypropylenglykol,
. Polymethacrylsäure,
. Poly-N-vinyl-oxazolidon;
. teilweise acetalisiertem Polyvinylalkohol,
. teilweise cyanethyliertem Polyvinylalkohol,
. Poly-N-isopropylacrylamid,
. Poly(vinylmethylether),
. Poly-L-prolin,
. anderen Polyaminosäuren und Proteinen
. und Copolymeren, die aus hydrophoben und hydrophilen Monomeren aufgebaut sind.

6. Polymere nach einem der Ansprüche 1 bis 5,
**dadurch gekennzeichnet,**
daß sie erhalten werden durch Pfropfen der wärmeempfindlichen Teile a), die eine aktive Pfropfstelle tragen, auf entsprechende aktive Stellen auf dem Skelett.

7. Polymere nach einem der Ansprüche 1 bis 5,
**dadurch gekennzeichnet,**
daß sie erhalten werden durch die Copolymerisation der Monomere, aus denen das Skelett aufgebaut ist, und der Monomere, aus denen die Sequenzen gemäß b) aufgebaut sind, oder, in beiden Fällen, von Monomeren und Prepolymeren oder Makromonomeren, die jeweils dem Skelett oder den Ketten entsprechen.

8. Polymere nach einem der Ansprüche 1 bis 7,
**dadurch gekennzeichnet,**
daß sie ausgewählt sind aus:
. Polyacrylsäure mit Molekulargewicht 500.000, gepfropft mit 0,17 % (pro Mol) Polyoxyethylen mit Molekulargewicht 5000 gemäß Anspruch 6.
. Polyacrylsäure mit Molekulargewicht 150.000, gepfropft mit 0,8 % (pro Mol) Polyoxyethylen mit Molekulargewicht 5000 gemäß Anspruch 6.
. Polyacrylsäure mit Molekulargewicht 150.000, gepfropft mit 0,4 % (pro Mol) Polyoxyethylen mit Molekulargewicht 5000 gemäß Anspruch 6.
. Einem Copolymer p AMPS/2,15-POE5 und einem Molekulargewicht der POE-Ketten 5000 gemäß Anspruch 7.
. Einem Copolymer p AMPS/1,15-POE5 und einem Molekulargewicht der POE-Ketten von 5000 gemäß Anspruch 7.
. Polyacrylsäure mit Molekulargewicht 150.000, gepfropft mit 21 % (pro Mol) Polyoxypropylen mit Molekulargewicht 600 gemäß Anspruch 6.
. Polyacrylsäure mit Molekulargewicht 150.000, gepfropft mit 5,9 % (pro Mol) Propylen- und Ethylen-Polyoxid mit Molekulargewicht 1100 gemäß Anspruch 6.
. Einem Terpolymer aus AMPS, N-Methylvinylacetamid und Acrylsäure, gepfropft mit 0,6 Mol-% Polyoxyethylen mit Molekulargewicht 5000 gemäß Anspruch 6.

9. Verwendung von Polymeren nach einem der Ansprüche 1 bis 8 als Verdickungsmittel, Bestandteile von Brechfluids oder von Bohr- oder Komplettierungsfluids, insbesondere für Bohrlochzementierung in der Öl- oder Geothermalindustrie, oder von Ansäuerungsmitteln, Fließregelungsmitteln oder von Fluids zur verbesserten Ölrückgewinnung und ähnlichen Fluids für die Ölindustrie, als industrielle Reinigungsfluids, als hydraulische Fluids und als Schmiermittel auf der Basis von Wasser.

10. Verwendung von Polymeren gemäß Anspruch 9,
**dadurch gekennzeichnet,**
daß zu dem Fluid Salz hinzugegeben wird, um die kritische Temperatur, oberhalb derer die Viskosität zunimmt, zu senken.

11. Verwendung von Polymeren gemäß Anspruch 9 oder 10,
**dadurch gekennzeichnet,**
daß nicht gepfropfte wärmeempfindliche Polymere zu dem Fluid hinzugegeben werden, um die kritische Temperatur, oberhalb derer die Viskosität zunimmt, zu senken.

## Revendications

1. Polymères dont une solution aqueuse a une viscosité qui, au delà d'un certain seuil de température, augmente ou reste approximativement constante avec une augmentation de la température, caractérisés en ce qu'ils sont constitués par un squelette polymère hydrosoluble comprenant des unités hydrophiles dans l'ensemble du domaine de température d'utilisation, ledit squelette hydrophile
a) portant des parties greffées thermosensibles et/ou
b) incorporant dans la chaîne des séquences d'unités hydrophiles des unités thermosensibles constituées de chaînes de polyoxyde d'éthylène (POE), de polyoxyde de propylène (POP) ou de polyoxyde d'éthylène et de propylène (POEP) ou des séquences hydrosolubles portant des parties greffées thermosensibles
lesdites parties thermosensibles étant hydrophiles à des températures inférieures à une température basse de solubilité (LCST) dans le domaine de température d'utilisation et hydrophobes au dessus de la température basse de solubilité.

2. Polymères selon la revendication 1 caractérisés en ce que lesdites unités hydrophiles du squelette consistent en unités d'acide acrylique.

3. Polymères selon la revendication 1 caractérisés en ce que ledit squelette hydrosoluble consiste en un terpolymère d'acide acrylique, acrylomido-méthylpropyl-sulfonate AMPS et N-méthyl vinyl acétamide.

4. Polymères selon la revendication 1, caractérisés en ce que lesdites parties thermosensibles greffées sont constituées de chaînes de polyoxyde d'éthylène (POE), chaînes de polyoxyde de propylène (POP) ou chaînes de polyoxyde d'éthylène et de propylène (POEP).

5. Polymères selon la revendication 1, caractérisés en ce que lesdites parties lesdites parties thermosensibles consistent en chaînes choisies parmi:
• méthylcellulose,
• hydroxypropylcellulose,
• copolymères alcool polyvinylique-acétate de vinyle
• poly(éthylène glycol),
• polypropylène glycol,
• acide polyméthacrylique,
• poly-N-vinyl-2-oxazolidone,
• alcool polyvinylique partiellement acétalisé,
• alcool polyvinylique partiellement cyanoéthylé,
• poly-N-isopropylacrylamide,
• poly(vinyl méthyl éther)
• poly-L-proline,
• autres polyamino acides et protéines
• et des copolymères construits a partir de monomères hydrophobes et hydrophiles.

6. Polymères selon l'une quelconque des revendications 1 à 5, caractérisés en ce qu'ils sont obtenus en greffant les parties thermosensibles a) portant un site actif de greffage sur des sites actifs correspondants du squelette.

7. Polymères selon l'une quelconque des revendications 1 à 5, caractérisés en ce qu'ils sont obtenus par copolymérisation des monomères constituant le squelette et des monomères constituant les dites séquences selon b), ou, dans les deux cas, de monomères ou prépolymères ou macromonomères correspondant, respectivement, audit squelette ou auxdites chaînes.

8. Polymères selon l'une quelconque des revendications 1 à 7, caractérisés en ce qu'ils sont choisis parmi
• Acide polyacrylique de masse moléculaire 500000 greffé avec 0,17 % (par mole) de polyoxyde d'éthylène de masse moléculaire 5000 obtenu par la méthode de revendication 7
• Acide polyacrylique de masse moléculaire 150000 greffé avec 0,8 % (par mole) de polyoxyde d'éthylène de masse moléculaire 5000, obtenu par la méthode de revendication 7
• Acide polyacrylique de masse moléculaire 150000 greffé avec 0,4 % (par mole) de polyoxyde d'éthylène de masse moléculaire 5000, obtenu par la méthode de revendication 7.
• Un copolymère p AMPS/2,15-POE5 et une masse moléculaire des chaînes POE de 5000, obtenu par la méthode de revendication 8.
• Un copolymère p AmPS/1,15-POE5 et une masse moléculaire des chaînes POE de 5000, obtenu par la méthode de revendication 8.
• Acide polyacrylique de masse moléculaire 150000 greffé avec 21 % (par mole) de polyoxyde de propylène de masse moléculaire 600, obtenu par la méthode de la revendication 7.
• Acide polyacrylique de masse moléculaire 150000 greffé avec 5,9 % (par mole) de polyoxyde de propylène et d'éthylène de masse moléculaire 1100, obtenu par la méthode de revendication 7.
• Un terpolymère de AMPS, N-méthylvinylacétamide et acide acrylique, greffé avec 0,6% en mole de poly-oxyde d'éthylène de masse moléculaire 5000, obtenu par la méthode de revendication 7.

9. Utilisation des polymères selon l'une quelconque des revendications 1 à 8 comme agents épaississants, composants de fluides de fracturation ou de fluides de forage ou de complétion, en particulier pour la cimentation de trou de forage dans l'industrie pétrolière et géothermique, ou d'acidification, agents de contrôle de mobilité ou de fluides pour la récupération assistée du pétrole, et fluides analogues de l'industrie pétrolière, comme fluides de nettoyage industriel, comme fluides hydrauliques et comme lubrifiants à base aqueuse.

10. Utilisation de polymères selon la revendication 9, caractérisée en ce qu'un sel est ajouté au fluide pour abaisser la température critique au dessus de laquelle la viscosité augmente.

11. Utilisation de polymères selon la revendication 9 ou 10, caractérisée en ce que des polymères thermosensibles non greffés sont ajoutés au fluide pour abaisser la température critique au dessus de laquelle la viscosité augmente.
